# EUROPÄISCHE PATENTANMELDUNG

(11) **EP 1 462 037 A1**
(43) Veröffentlichungstag der Anmeldung: **29.09.2004**
(21) Anmeldenummer: 04405177.9
(22) Anmeldetag: 23.03.2004
(51) Int. Cl.: A47G 19/22

(54) **Gefäss**

(30) Priorität: 28.03.2003 CH 5492003
(71) Anmelder: Gabriel, Anna, 6850 Dornbirn (AT); Schröck, Peter, 6091 Birgitz (AT)
(72) Erfinder: Schröck, Peter, 6091 Birgitz (AT)
(74) Vertreter: Gachnang, Hans Rudolf

(57) **Zusammenfassung**

Im erfindungsgemässen Gefäss (1) ist in dessen Wandung (Bodenbereich (7) oder Wandbereich (5)) eine Kavität (11) ausgebildet, die der Aufnahme einer Flüssigkeit oder eines festen Stoffes mit besonderen Eigenschaften dient.

## Beschreibung

Gegenstand der Erfindung ist ein Gefäss für flüssige und feste Produkte gemäss Oberbegriff des Patentanspruchs 1.

Es ist bekannt, dass die Eigenschaften von flüssigen Stoffen, z.B. Wasser, und von festen Stoffen, z.B. Lebensmittel, durch äussere Einwirkungen physikalischer Natur verändert werden können. Die Durchführung dieser physikalischen Veränderungen kann sehr aufwendig sein und ist für den einzelnen Konsumenten gemäss den bekannten Verfahren nicht möglich.

Aufgabe der vorliegenden Erfindung besteht nun darin, ein Mittel zu schaffen, mit dem jedermann die Möglichkeit in die Hand gegeben wird, diese physikalischen Veränderungen flüssiger oder fester Stoffe vorzunehmen.

Gelöst wird diese Aufgabe durch ein Gefäss mit den Merkmalen des Patentanspruchs 1.

Mit einem in eine Kavität in der Wandung des Gefässes eingebrachten energetisch angereicherten Stoff gelingt es, ohne direkten Kontakt mit den im Aufnahmebereich des Gefässes eingefüllten oder eingelegten flüssigen oder festen Produkten letztere physikalisch zu beeinflussen.

Anhand illustrierter Ausführungsbeispiele wird die Erfindung näher erläutert. Es zeigen
- Figur 1: einen Querschnitt durch einen Krug,
- Figur 2: einen Querschnitt durch eine Früchteschale,
- Figur 3: einen Querschnitt durch ein Trinkgefäss.

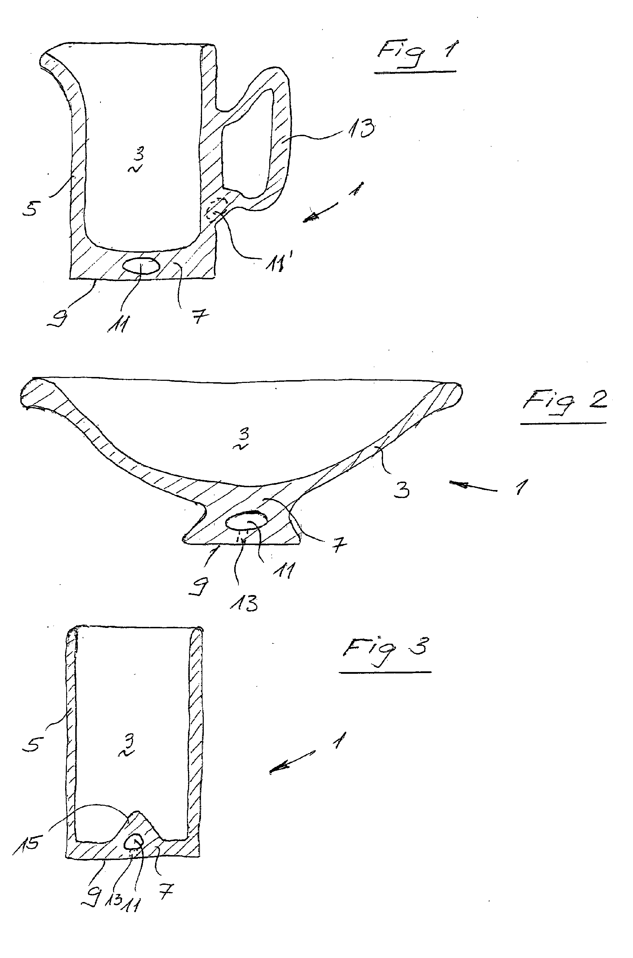

Die in den Figuren dargestellten Gefässe 1 für flüssige oder feste Stoffe, beispielsweise Getränke oder Früchte, weisen alle einen Aufnahmebereich 3 auf, der oben offen ist. Selbstverständlich könnte der Aufnahmebereich 3 durch einen Deckel, beim Krug in Figur 1 durch einen angelenkten Deckel, wie er beispielsweise von Bierseideln bekannt ist, oben verschliessbar sein. Der Aufnahmebereich 3 wird von einem Wandbereich 5 sowie einem Bodenbereich 7 gebildet. Der Bodenbereich 7 kann gleichzeitig als Standfläche 9 dienen. In den drei dargestellten Beispielen sind im Bodenbereich mindestens je eine Kavität 11 in Gestalt eines kugeligen oder anders geformten Hohlraums ausgebildet. Im Gefäss 1 gemäss Figur 1 ist zusätzlich oder alternativ eine Kavität 11' im Wandbereich 5, z.B. an der Verbindungsstelle eines Henkels 13 mit der Wandung 5 vorgesehen. Die Kavität 11 kann, wie in Figur 1 dargestellt, vollständig im Innern der Wandung des Bodenbereichs 7 bzw. Wandbereichs 5 liegen oder, wie in den Figuren 2 und 3 angedeutet, eine verschliessbare öffnung 13 aufweisen, die einen Zugang zur Kavität 11 von der Aussenseite 15 des Gefässes ermöglicht. Im Beispiel gemäss Figur 3 ist die Kavität 11 in einem Buckel 15 untergebracht, welcher Buckel 15 gegen das Innere, d.h. den Aufnahmebereich 3 des Gefässes 1 ragt.

Die Kavität 11 bzw. 11' nimmt eine Flüssigkeit oder auch ein Festkörper auf, welcher durch eine physikalische Behandlung energetisch auf ein höheres Niveau gebracht worden ist. Als Flüssigkeit kann auch ein Heilwasser oder ein anderes von Natur aus besondere Eigenschaften aufweisendes Quellwasser eingebracht sein. Anstelle von Flüssigkeiten können beispielsweise energiereiche Steine eingelegt sein. In jedem Fall ist der in die Kavität 11 eingebrachte Stoff, sei er nun flüssig oder fest, nicht in direktem Kontakt mit den im Aufnahmebereich 3 des Gefässes vorhandenen Flüssigkeiten oder festen Produkte. Letztere sind jedoch der von den in der Kavität 11 eingelegten Stoffen ausgehenden Energie ausgesetzt.

## Patentansprüche

1. Gefäss (1) für flüssige und feste Produkte mit einem den Aufnahmebereich (3) mindestens teilweise umschliessenden Wandbereich (5) und einem das Gefäss (1) tragenden Bodenbereich (7), **dadurch gekennzeichnet, dass** im Wand- (5) oder im Bodenbereich (7) eine mit dem Aufnahmebereich (3) nicht in direktem Kontakt stehende Kavität (11) ausgebildet ist.

2. Gefäss nach Anspruch 1, **dadurch gekennzeichnet, dass** die Kavität (11) mit der Aussenseite des Gefässes (1) durch eine verschliessbare öffnung (13) verbunden ist.

3. Gefäss nach einem der Ansprüche 1 oder 2, **dadurch gekennzeichnet, dass** die Kavität (11) im Zentrum des Bodenbereichs (7) innerhalb des Wandungsquerschnitts oder in einem gegen den Aufnahmebereich (3) ragenden Buckel (15) ausgebildet ist.

4. Gefäss nach einem der Ansprüche 1 oder 2, **dadurch gekennzeichnet, dass** die Kavität (11') im Ansatzbereich eines Henkels (13) ausgebildet ist.

5. Gefäss nach einem der Ansprüche 1 bis 4, **dadurch gekennzeichnet, dass** in der Kavität (11) eine Flüssigkeit oder ein fester Stoff eingeschlossen ist.

6. Gefäss nach Anspruch 5, **dadurch gekennzeichnet, dass** als Flüssigkeit ein Heilwasser, ein Quellwasser oder ein energetisch behandeltes Wasser eingefüllt ist.
